# EUROPÄISCHE PATENTSCHRIFT

(11) **EP 2 460 618 B1**
(45) Veröffentlichungstag und Bekanntmachung des Hinweises auf die Patenterteilung: **06.03.2013**
(21) Anmeldenummer: 10015228.9
(22) Anmeldetag: 02.12.2010
(51) Int. Cl.: B23P 19/00, B23P 21/00

(54) **Fertigungsanlage und Fertigungsverfahren für Fenster- oder Türrahmen**
Production assembly and method for window or door frames
Installation de fabrication et procédé de fabrication pour cadres de fenêtres ou de portes

(43) Veröffentlichungstag der Anmeldung: 06.06.2012
(73) Patentinhaber: Hollinger Maschinen GmbH, 66953 Pirmasens (DE)
(72) Erfinder: Hollinger, Peter, 66953 Pirmasens (DE); Schwarz, Kurt, 66989 Höheischweiler (DE)
(74) Vertreter: Tergau & Walkenhorst

(56) Entgegenhaltungen:
- DE-A1- 3 817 005
- DE-A1- 4 206 991
- DE-A1- 4 406 381
- DE-A1- 19 908 740
- DE-U1- 20 206 377

## Beschreibung

Die Erfindung betrifft eine Fertigungsanlage bzw. Montageanlage für Fensterrahmen oder Türrahmen sowie ein entsprechendes Fertigungsverfahren.

Fensterrahmen, Türrahmen und dergleichen von moderner Bauart bestehen üblicherweise aus einer Mehrzahl von miteinander verbundenen Profilelementen, insbesondere Hohlprofilelementen aus Kunststoff. Sie weisen in der Regel einen äußeren Rahmen von rechteckförmiger Gestalt auf, der zwei parallele Längsträger und zwei parallele Querträger umfasst. In den vier Ecken, in denen jeweils ein Längsträger mit einem Querträger zusammenstößt, sind die üblicherweise auf Gehrung geschnittenen Enden der Träger in der Regel miteinander verschweißt. Hierzu können bei der Fertigung automatisierte Schweißmaschinen zum Einsatz kommen. Weiterhin kann ein derartiger Rahmen eine Anzahl von parallel zu den äußeren Querträgern verlaufenden Querstreben oder kurz Streben aufweisen, die auch als Pfosten oder Kämpfer bezeichnet werden. Derartige Streben sind an ihren Enden üblicherweise mit den Längsträgern des Rahmens verschraubt.

Derzeit ist es üblich, derartige Schraubverbindungen manuell herzustellen. Dazu müssen in die Längsträger an passender Stelle Bohrungen zur Aufnahme der Montageschrauben eingebracht werden. Anschließend werden die Träger und die Streben von Hand ausgerichtet und die Montageschrauben durch die vorgebohrten Löcher im Träger hindurch in die stirnseitigen Enden der Streben eingedreht. Diese Vorgänge sind arbeits- und zeitaufwendig, insbesondere bei Vorhandensein mehrerer Streben. Häufig wird auch nicht die gewünschte Präzision erzielt, so dass die Ausrichtung und Positionierung einzelner Rahmenelemente ungenau sein kann. Dies kann das Einsetzen des Fenster- oder Türglases erschweren und gegebenenfalls auch die Festigkeitswerte und die Wärmedämmungseigenschaften des Fensters oder der Tür in unerwünschter Weise beeinflussen.

Eine Fertigungsanlage mit den Merkmalen des Oberbegriffs von Anspruch 1 ist aus der Offenlegungsschrift DE 38 17 005 A1 bekannt.

Der vorliegenden Erfindung liegt die Aufgabe zugrunde, eine Fertigungsanlage und ein zugehöriges Fertigungsverfahren für Fensterrahmen oder Türrahmen anzugeben, die die oben geschilderten Schwierigkeiten manueller Fertigung bzw. Montage vermeiden, und die zugleich bei einfach gehaltener Bauweise für einen zuverlässigen und kostengünstigen Dauerbetrieb ausgelegt sind.

In Bezug auf die Vorrichtung wird die Aufgabe erfindungsgemäß gelöst durch die Merkmale des Anspruchs 1.

In bezug auf das Fertigunsverfahren wird die Aufgabe erfindungsgemäß durch die Merkmale des Anspruchs 13 gelöst.

Der durch automatisierte Montage mit dem erfindungsgemäßen Kombinationsaggregat mit den Hauptfunktionen Strebenhandhabung, Bohren und Schrauben erzielte zeitliche Vorteil gegenüber der bisherigen manuellen Montage liegt bei 2 bis 3 Minuten je Strebe und kann durch geschickt gewählte Betriebsweisen gemäß den Verfahrensansprüchen noch weiter optimiert werden. Montagefehler und Ausrichtungsungenaurigkeiten jenseits einer zulässigen Toleranzschwelle sind praktisch ausgeschlossen.

Vorteilhafte Ausgestaltungen und Weiterentwicklungen der Grundidee, die zum Teil eigenständig erfinderischen Charakter haben, gehen aus den abhängigen Ansprüchen und aus der nachfolgenden detaillierten Beschreibung eines bevorzugten Ausführungsbeispiels hervor.

Ein Ausführungsbeispiel der Erfindung wird nachfolgend anhand von Zeichnungen näher erläutert. Dabei zeigen:
- FIG. 1: eine perspektivische Darstellung einer Montageanlage für Fensterrahmen in einem frühen Stadium der von ihr ausgeführten Montageschritte,
- FIG. 2: die Montageanlage gemäß FIG. 1, nachdem sie einige Montageschritte durchgeführt hat, und
- FIG. 3 bis 7: weitere perspektivische Darstellungen von diversen Komponenten der Montageanlage gemäß FIG. 1.

Gleiche Teile sind in allen Figuren mit denselben Bezugszeichen versehen.

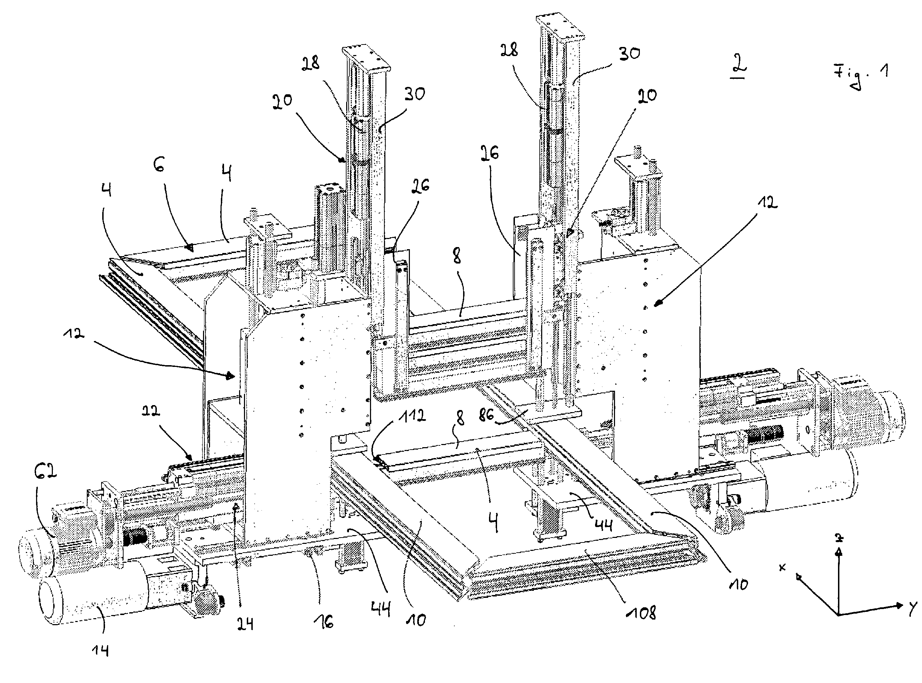

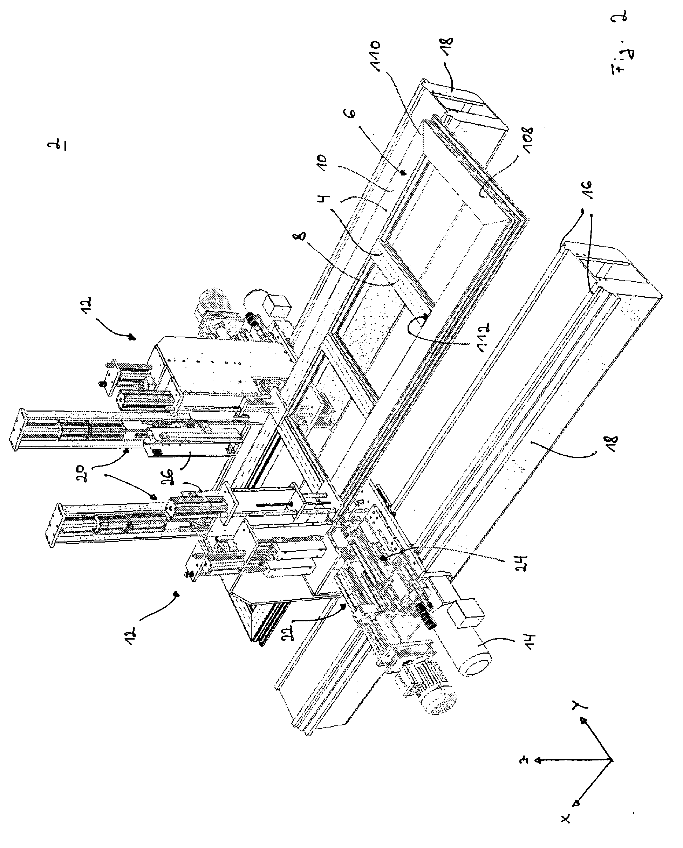

Die in FIG. 1 und FIG. 2 in einer perspektivischen Ansicht dargestellte Montageanlage 2 dient zur automatisierten Durchführung von Montageschritten bei der Montage von aus mehreren Profilelementen 4 zusammengesetzten Fensterrahmen 6 und dergleichen. Insbesondere ermöglicht die Montageanlage 2 eine dauerhafte Verbindung der auch als Kämpfer bezeichneten Querstreben oder kurz Streben 8 mit den beiden äußeren Längsträgern 10 eines Fensterrahmens 6 durch Verschrauben.

Zu diesem Zweck umfasst die Montageanlage 2 zwei Montageeinheiten 12, die jeweils mit Hilfe von Antriebsmitteln, z. B. elektrischen Schrittmotoren 14, in Längsrichtung x auf einer zugeordneten horizontalen Führungsschiene 16 eines Trägerelementes 18 (nur in FIG. 2 dargestellt) verschiebbar angeordnet sind. Genauer gesagt trägt jedes der beiden parallel zueinander entlang der Längsrichtung x ausgerichteten Trägerelemente 18 mit der zugehörigen Führungsschiene 16 eine Montageeinheit 12. Der Abstand in Querrichtung y zwischen den beiden Trägerelementen 18 ist mittels eines hier nicht dargestellten Verstellantriebs innerhalb gewisser Grenzen einstellbar. Die beiden Trägerelemente 18 und mit ihnen die Führungsschienen 16 sind auf gleicher Höhe z angeordnet. Die beiden Montageeinheiten 12 sind spiegelbildlich zueinander aufgebaut mit einer gedachten x-z-Mittelebene als Symmetrieebene. Die Ansteuerung der beiden Montageeinheiten 12 ist derart aufeinander abgestimmt, dass ihre beweglichen Komponenten während des Betriebs gleichartige Bewegungsabläufe simultan durchführen. Aus diesem Grunde genügt es im Folgenden in der Regel, zunächst den Aufbau einer einzelnen Montageeinheit 12 zu betrachten. Im Anschluss daran wird anhand von FIG. 1 und FIG. 2 der Gesamt-Bewegungsablauf der Montageanlage 2 bei der Montage eines Fensterrahmens 6 erläutert.

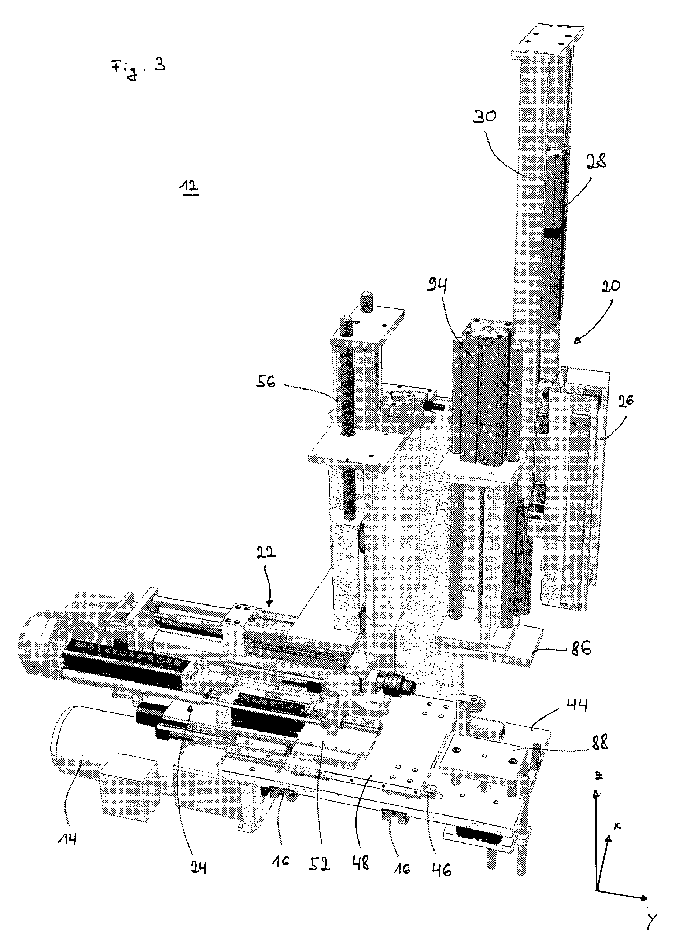

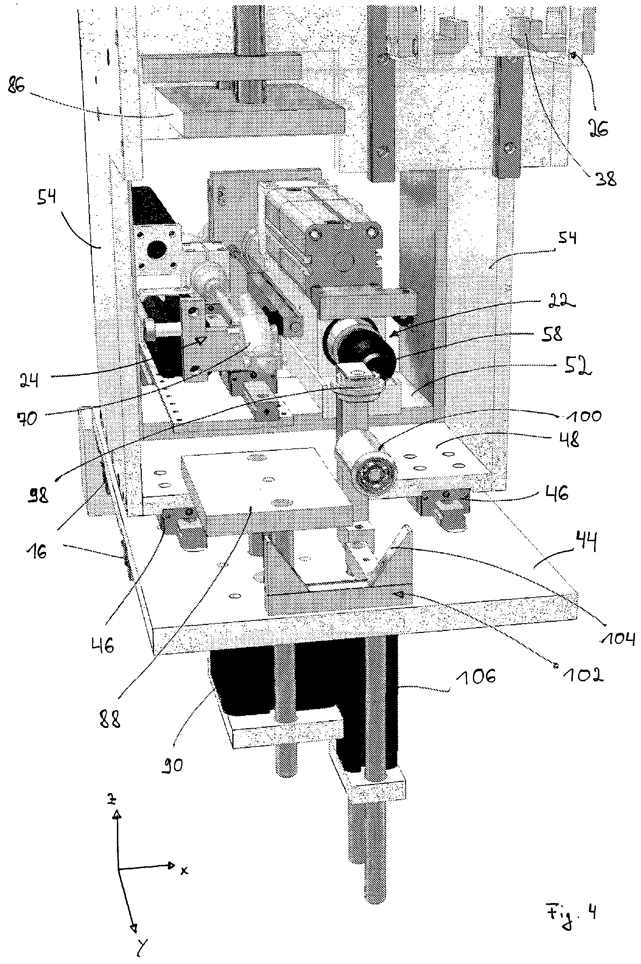

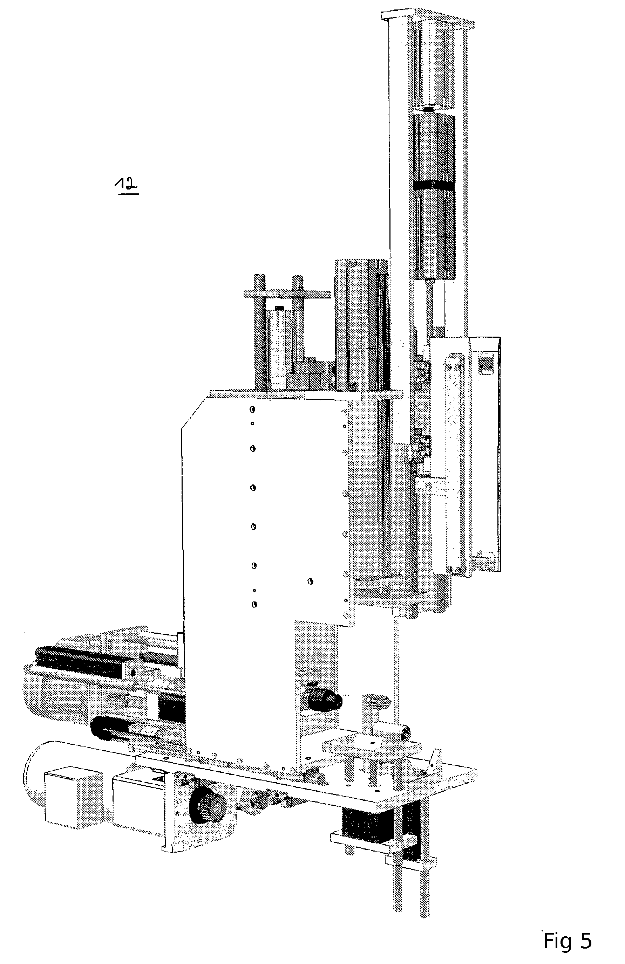

FIG. 3 und FIG. 4 zeigen jeweils in unterschiedlichen perspektivischen Darstellungen die vordere der beiden Montageeinheiten 12 gemäß FIG. 1, wobei in FIG. 3 aus Gründen der besseren Einsehbarkeit und Übersichtlichkeit einige der seitlichen Verkleidungs- und Trägerelemente weggelassen wurden, während FIG. 4 nur einen unteren Ausschnitt zeigt. Eine weitere Ansicht ist in FIG. 5 enthalten. Die Hauptbestandteile der Montageeinheit 12 sind eine Handhabungseinheit für die Streben 8 oder kurz Strebeneinheit 20, eine Bohreinheit 22 und eine Schraubeinheit 24, die im Folgenden näher beschrieben werden.

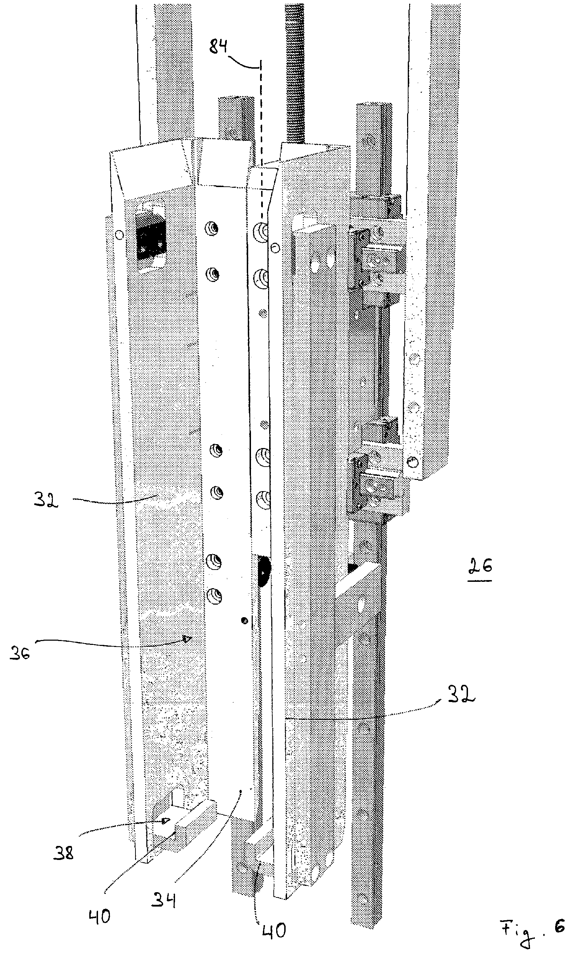

Die Strebeneinheit 20 der Montageeinheit 2 dient zur Aufnahme eines Vorrats von zu montierenden Streben 8, die während des Betriebs nacheinander an festgelegten Zielpostionen zwischen die beiden Längsträger 10 des späteren Fensterrahmens 6 abgelegt werden (die zugehörige Ablagefläche, kurz Ablage oder Unterlage, ist in den Figuren nicht dargestellt). Dazu weist die Strebeneinheit 20 ein höhenverstellbares Magazin 26 auf, das in FIG. 6 in einer perspektivischen Detaildarstellung gezeigt ist, und das entsprechend der oben gemachten Bemerkung zur Symmetrie der Montageanlage 2 mit einem entsprechenden Magazin 26 der zweiten Montageinheit 12 positions- und bewegungsmäßig gekoppelt ist. Die Kopplung ist dergestalt, dass die mit ihren beiden Enden in den einander gegenüberliegenden Magazinen 26 fixierten Streben 8 in Querrichtung y ausgerichtet sind (siehe FIG. 1).

Das jeweilige Magazin 26 ist mit Hilfe eines Pneumatikzylinders 28 entlang einer vertikalen Führungsschiene 30 in z-Richtung verfahrbar. Das Magazin 26 weist zwei als seitliche Begrenzungen wirksame Seitenwände 32 und eine Rückwand 34 auf. Der Abstand zwischen den beiden Seitenwänden 32 ist auf die Breite des aktuell verwendeten Strebentyps einstellbar, wozu in FIG. 6 nicht näher sichtbare Verstellmittel vorgesehen sind. Der Abstand zwischen den Rückwänden 34 der beiden Magazine 26 ist auf die Länge des Strebentyps abgestimmt, was zum einen durch den einstellbaren Abstand zwischen den beiden Trägerelementen 18 und zum anderen durch eine entsprechende Verschiebbarkeit der jeweiligen Strebeneinheit 20 in Querrichtung y gegenüber dem ihr zugeordneten Trägerelement 18 einstellbar ist (siehe weiter unten). Die beiden Seitenwände 32 und die Rückwand 34 begrenzen damit einen nach oben hin offenen Aufnahme- und Führungsschacht 36 für einen Vorrat von zu montierenden Streben 8. Die Streben 8 liegen übereinander gestapelt in dem Aufnahme- und Führungsschacht 36, wobei im Normalfall die unterste Strebe 8 auf einem unteren Beistellanschlag 38 am unteren Ende des Magazins 26 aufliegt. Im Bedarfsfall ist der untere Beistellanschlag 38 lösbar bzw. wegschwenkbar. Dies ist vorliegend realisiert durch zwei durch die Seitenwände 32 hindurchgreifende Halteklauen 40, die über hier nicht näher sichtbare Verstellmittel nach außen weggeschwenkt werden können. Die Befüllung der beiden Magazine 26 mit einem Vorrat von Streben 8 erfolgt von oben über die oberen offenen Enden ihrer Aufnahme- und Führungsschächte 36.

Wenn das jeweilige Magazin 26 sich in der unteren Endstellung (Auswurfstellung) befindet, wird der untere Beistellanschlag 38 weggeschwenkt, und die unterste Strebe 8 des Vorrats rutscht aus dem Magazin 26 hinaus in ihre Zielposition. Die weiter oben im Magazin 26 liegenden Streben 8 rutschen entsprechend nach. Der untere Beistellanschlag 38 wird danach wieder in die Schließposition gebracht, und das Magazin 26 kann wieder hoch in die Transportstellung verfahren werden.

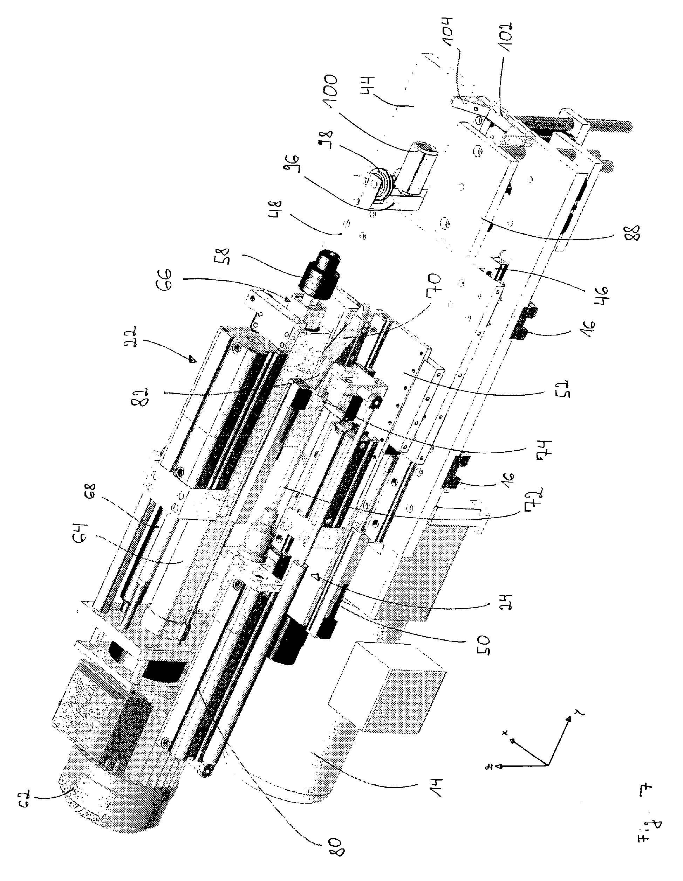

Die Montageeinheit 2 weist eine auf den horizontalen Führungsschienen 16 des Trägerelements 18 in x-Richtung gleitende oder rollende Basisplatte 44 auf. Auf der Oberseite der Basisplatte 44 ist eine ihrerseits mittels entsprechender horizontaler Führungsschienen 46 in y-Richtung gleitende oder rollende Zwischenplatte 48 verschiebbar befestigt bzw. gelagert. Die zugehörigen Antriebsmittel, die bedarfsweise eine Verschiebung der Zwischenplatte 48 in y-Richtung relativ zur Basisplatte 44 bewirken, sind vorliegend als Pneumatikzylinder 50 ausgestaltet und beispielsweise in FIG. 7 sichtbar. Die Strebeneinheit 20 mit dem höhenverstellbaren Magazin 26 ist über eine Anzahl von Trägerelementen starr mit der Zwischenplatte 48 verbunden und daher zusammen mit der Zwischenplatte 48 in y-Richtung und zusammen mit der Zwischenplatte 48 und der Basisplatte 44 in x-Richtung verschiebbar.

Weiterhin ist oberhalb der Zwischenplatte 48 eine Montageplatte 52 für die Bohreinheit 22 und die Schraubeinheit 24 vorgesehen, die über starr mit der Zwischenplatte 48 verbundene, innerhalb der Seitenwände 54 (siehe FIG. 4) liegende und hier nicht sichtbare vertikale Führungsschienen höhenverstellbar ist. Mit anderen Worten: Die horizontale Position der Montageplatte 52 in x- und y-Richtung ist durch die entsprechende Position der Zwischenplatte 48 festgelegt, zusätzlich ist aber noch eine Höhenverstellung der Montageplatte 52, d. h. eine Verstellung in z-Richtung, über vorliegend als Pneumatikzylinder 56 ausgestaltete Antriebsmittel möglich (siehe FIG. 3). Die Montageplatte 52 wiederum trägt die Bohreinheit 22 und die Schraubeinheit 24, deren konstruktive Ausgestaltung im Einzelnen am besten aus der perspektivischen Darstellung in FIG. 7 hervorgeht, bei der allerdings aus Gründen der Übersichtlichkeit einige andere Elemente wieder ausgeblendet sind.

Die Bohreinheit 22 umfasst ein Bohrfutter 58 zur Aufnahme eines Bohrers bzw. Bohreinsatzes (nicht dargestellt), welcher über einen Antriebsmotor 62 und eine zwischengeschaltete Welle 64 angetrieben und bedarfsweise in Rotation versetzt wird. Der Bohrer ist in y-Richtung ausgerichtet und dient dazu, nach Art einer Vorbohrung Bohrlöcher in die äußeren Längsträger 10 des Fensterrahmens 6 einzubringen, durch die anschließend mit Hilfe der Schraubeinheit 24 Montageschrauben (nicht sichtbar) hindurch gesteckt oder eingedreht werden, um die gewünschte Schraubverbindung der Längsträger 10 mit den Streben 8 herzustellen. Zum Vortrieb des Bohrers wird das Kopfteil 66 der Bohreinheit 22 mit dem Bohrfutter 58 über einen Pneumatikzylinder 68 relativ zur Montagplatte 52 in y-Richtung nach vorne bewegt. Durch geeignete Wellenlager und dergleichen ist ein kontinuierlicher rotatorischer Kraftfluss vom Antriebsmotor 62 zum Bohrfutter 58 auch während der Linearverstellung des Kopfteils 66 mit dem Bohrfutter 58 sichergestellt. Durch die Höhenverstellbarkeit der Montageplatte 52 kann die Höhe z der Bohreinheit 22 und damit des Bohrlochs geeignet eingestellt werden.

Seitlich neben der Bohreinheit 22 ist die Schraubeinheit 24 auf der Montageplatte 52 angeordnet. Sie umfasst ein Kopfteil 70 mit trichterartiger Aushöhlung, in das eine Montageschraube (nicht dargestellt) mit ihrem Kopf derart eingelegt werden kann, dass der das Schraubgewinde tragende Bolzen in y-Richtung ausgerichtet ist und nach vorne heraus herausgedreht werden kann. Hierzu ist ein Schraubwerkzeug 72 mit einer zum Eingriff in den Kopf der Montageschraube ausgelegten Schraubklinge 74 vorgesehen, das ähnlich wie der Bohreinsatz der Bohreinheit 22 über einen Antriebsmotor und eine zwischengeschaltete Welle in Rotation versetzbar ist, und das über einen als Pneumatikzylinder 80 ausgestalteten Linearantrieb in y-Richtung vorangeschoben werden kann. Die Zuführung der jeweiligen Montageschraube in das Kopfteil 70 erfolgt über eine mit einem Anschlussstück 82 des Kopfteils 70 verbundene flexible Zufuhrleitung (hier nicht dargestellt) durch geeignete Druckluftstöße. Die Montageschrauben werden also bedarfsweise aus einem Schraubenmagazin (ebenfalls nicht dargestellt) einzeln und nacheinander per Druckluftimpuls in das Kopfteil 70 überführt.

Die Mittelachse des im Bohrfutter 58 eingespannten Bohrers und die Mittelachse des Schraubwerkzeuges 72 - und damit der im Kopfteil 70 der Schraubeinheit 24 bereit gehaltenen Montageschraube - sind in x-Richtung gesehen um einen festen Abstand zueinander versetzt angeordnet. Zur Vereinfachung der Ansteuerung der einzelnen Komponenten der Montageeinheit 12 und zur Minimierung der Verfahroperationen und -wege liegen sie beide stets auf gleicher Höhe z. Aus demselben Grund stimmt die x-Position der Mittelachse des Bohrers mit der x-Koordinate der Mittelinie 84 (siehe FIG. 6) des an der Strebeneinheit 20 befestigten Magazins 26 überein. Damit ist es möglich, an einer bestimmten x-Position eine im Magazin 26 der Strebeneinheit 20 vorgehaltene Strebe 8 abzusetzen und zeitgleich an eben dieser x-Position eine Bohrung durch den Längsträger 10 des Fensterrahmens 6 vorzunehmen (siehe weiter unten). Für die spätere Verschraubung ist der feste seitliche Versatz in x-Richtung zwischen Bohrer und Schraubwerkzeug 72 zu berücksichtigen. Optimal wäre es zwar, wenn dieser seitliche Versatz Null wäre und damit sowohl die Mittelachse des Bohrers, die Mittelachse des Schraubwerkzeuges 72 und die Mittellinie 84 des Magazins 26 in x-Richtung gesehen "in einer Flucht" lägen. Dem stehen aber vorliegend im Hinblick auf die erforderliche Höhenverstellbarkeit der Apparatur und die gegebenen konstruktiven Randbedingungen Platzprobleme entgegen.

Weiterhin sind an jeder Montageeinheit 12 ein oberes Fixierelement 86 und ein unteres Fixierelement 88 vorgesehen, die in z-Richtung derart aufeinander zu und voneinander weg bewegbar sind, dass der zugeordnete Längsträger 10 des Fensterrahmens 6 während bestimmter Bearbeitungsschritte, insbesondere beim Bohren und beim Schrauben, zwischen den beiden Fixierelementen 86 und 88 eingespannt werden kann. Im vorliegenden Ausführungsbeispiel ist das untere Fixierelement 88 in Form einer Fixierplatte ausgebildet und über einen pneumatischen Hubmechanismus 90 mit der Basisplatte 44 verbunden. Das ebenfalls plattenartig ausgestaltete obere Fixierelement 86 hingegen ist an einem starr mit der Zwischenplatte 48 verbundenen Träger, an dem auch die Strebeneinheit 20 befestigt ist, höhenverstellbar befestigt. Zur Betätigung ist ein Pneumatikzylinder 94 vorgesehen (siehe FIG. 3).

Ferner ist ein nach oben abstehender, pfostenartiger Mehrfachanschlag 96 an der Basisplatte 44 befestigt, der sowohl die Verschiebbarkeit der Zwischenplatte 48 in y-Richtung begrenzt als auch über eine an ihm montierte Laufrolle 98 mit vertikaler Drehachse einen Anschlag für den zugeordneten Längsträger 10 des zu montierenden Fensterrahmens 6 bildet. Aufgrund der frei drehbaren Laufrolle 98 kann die gesamte Montageeinheit 12 bei gelösten Fixierelementen 86 und 88 mit der Laufrolle 98 am Längsträger 10 anliegend und dennoch reibungsarm in x-Richtung verfahren werden. Eine weitere Laufrolle 100 mit horizontaler, in y-Richtung ausgerichteter Drehachse gewährt zusätzliche Führung an der Unterseite des Längsträgers 10.

Zur Zentrierung der von der Strebeneinheit 20 auf die Auflagefläche (nicht dargestellt) zwischen den horizontalen Trägerelementen 18 abgesetzten Streben 8 ist am vorderen Rand der Basisplatte 44 eine Zentrierhilfe 102 mit zwei einander gegenüberliegenden Abrutschschrägen 104 angeordnet. Die Zentrierhilfe 102 ist in x-Richtung gesehen auf die Mittelachse des Schraubwerkzeuges 72 ausgerichtet. Die Zentrierhilfe 102 kann mit Hilfe einer pneumatischen Hubvorrichtung 106 angehoben oder abgesenkt werden, so dass sie in der abgesenkten Stellung die Fahrvorgänge der Montageeinheit 12 in x-Richtung nicht stört (siehe FIG. 4).

Zur Versorgung aller pneumatischen Antriebs- und Betätigungsmittel mit Druckluft sind ein geeigneter Kompressor, gegebenenfalls ein Druckluftreservoir, Anschlussleitungen, pneumatische Schalter und dergleichen vorhanden, die in den Figuren der Einfachheit und Übersichtlichkeit halber nicht dargestellt sind. Entsprechendes gilt für die elektrischen Antriebsmittel und Steuerungseinheiten, die zusätzlich oder alternativ für einzelne oder sämtliche mit Bewegungsvorgängen verknüpften Funktionen vorhanden sein können. Alle Steuerungs- und Regelfunktionen der Montageanlage 2 sind zweckmäßigerweise in einer zentralen elektronischen Steuerungseinheit (nicht dargestellt) gebündelt, die beispielsweise auf der Basis einer speicherprogrammierbaren Steuerung (SPS) in Verbindung mit einem handelsüblichen Personal Computer (PC) mit einem echtzeitfähigen Betriebssystem implementiert sein kann. In der Steuerungseinheit werden auch die Messsignale verschiedener Positions-, Zustands- oder Bewegungssensoren (ebenfalls nicht dargestellt), die die aktuellen Stellungen und Bewegungen diverser Anlagenkomponenten überwachen, erfasst, ausgewertet und zur Berechnung geeigneter Steuerbefehle auf der Grundlage mindestens eines hinterlegten Steuerprogrammes herangezogen.

Das Zusammenspiel der zuvor beschriebenen Komponenten der Montageanlage 2 bei der Montage eines Fensterahmes 6 ist beispielsweise wie folgt (siehe hierzu vor allem FIG. 1 und FIG. 2):
Über ein Eingabefeld der elektronischen Steuereinheit gibt eine Bedienperson den Typ der zu verarbeitenden Profilelemente 4, insbesondere Längsträger 10 und Streben 8 ein, deren geometrische Daten oder Parameter idealerweise bereits werksseitig in einem permanenten Speichermodul hinterlegt wurden. Alternativ werden derartige Daten über geeignete Eingabemasken bei Bedarf direkt eingegeben. Die beweglichen Komponenten der Montageanlage 2 fahren daraufhin in eine wohldefinierte Grundstellung. Insbesondere befinden sich die beiden Montageeinheiten 12 in Längsrichtung x gesehen beispielsweise an einem der beiden Enden des möglichen Verfahrweges. Die Magazine 26 der beiden Strebeneinheiten 20 befinden sich in angehobener Stellung, und der untere Beistellanschlag 38 befindet sich in Schließstellung. Der Abstand zwischen den beiden Trägerelementen 18 für die Montageeinheiten 12 ist geeignet eingestellt, ebenso die y-Position der Zwischenplatten 48 der beiden Montageeinheiten 12, über die bei festgehaltenem Abstand zwischen den beiden Trägerelementen 18 eine unabhängige Justierung des y-Abstandes der beiden Magazine 26 möglich ist. Die Bohreinheit 22 und die Schraubeinheit 24 befinden sich bereits auf der für die Bohrung und Verschraubung gewünschten Höhe z. Die Fixierelemente 86 und 88 befinden sich in einer gelösten Stellung, die Zentrierhilfe 102 ist abgesenkt.

Die Bedienperson legt einen Vorrat von Streben 8 nacheinander von oben in die Magazine 26 ein. Der Vorrat ist so bemessen, dass zumindest ein kompletter Fensterrahmen 6 in einem Durchgang ohne zwischenzeitliches Nachfüllen montiert werden kann. Außerdem positioniert die Bedienperson die äußeren Längsträger 10 sowie gegebenenfalls die Querträger 108 des zu montierenden Fensterrahmens 6 auf der zwischen den beiden Trägerelementen 18 für die Montageeinheiten 18 befindlichen Auflage (nicht dargestellt). Die Längsträger 10 liegen dabei an den Laufrollen 98 und 100 der Basisplatte 44 an. Ihre Lage in Bezug auf die x-Richtung bleibt während des Montagevorganges fixiert, verschiebt sich also gegenüber den Trägerelementen 18 für die Montageeinheiten 12 nicht. Zum Zweck der Fixierung können zusätzliche, hier nicht dargestellte Einspannvorrichtungen und dergleichen vorgesehen sein. Der Abstand zwischen den parallel liegenden Längsträgern 10 des Fensterrahmens 6 ist gemäß der Voreinstellung der Montageanlage 2 derart bemessen, dass die Streben 8 mit beidseitigem Spiel bzw. Zwischenraum zwischen die Längsträger 10 gelegt werden können. Zwischen den auf Gehrung geschnittenen Enden der Längsträger 10 und der Querträger 108 in den Ecken 110 des Fensterahmens 6 sind demnach ebenfalls noch freie Zwischenräume vorhanden (siehe FIG. 1).

Die Montageanlage 2 beginnt sodann auf entsprechende Bedieneingabe mit der Durchführung der Montage. Dazu fahren die Montageeinheiten 12 die vorgesehene x-Position für die erste Strebe 8 an. Sobald diese erreicht ist, werden die Längsträger 10 des Fensterahmes 6 mit Hilfe der Fixierelemente 86 und 88 eingespannt. Im Wesentlichen zeitgleich werden die Magazine 26 abgesenkt. In der unteren Endstellung der Magazine 26 werden die unteren Beistellanschläge 38 weggeschwenkt, und eine Strebe 8 wird zwischen die beiden Längsträger 10 auf die Auflage (nicht dargestellt) abgesetzt. Ebenfalls im Wesentlichen zeitgleich werden mit Hilfe der Bohreinheiten 22 die Bohrlöcher bzw. Aufnahmelöcher für die Montageschrauben durch die Längsträger 10 gebohrt (eine Vorbohrung an den Stirnseiten 112 der Streben 8 erfolgt nicht). Falls eine Mehrfachverschraubung einer Strebe 8 an mehreren übereinander liegenden Bohrlöchern vorgesehen ist, wird die Bohreinheit 22 nach dem ersten Bohrvorgang entsprechend angehoben oder abgesenkt und der Bohrvorgang wiederholt.

Nach dem Absetzen der Strebe 8 und dem Durchbohren der Längsträger 10 werden die Fixierelemente 86 und 88 wieder gelöst und die Magazine 26 der beiden Montageeinheiten 12 angehoben. Die unteren Beistellanschläge 38 werden wieder geschlossen, sobald die auf der Auflage abgesetzte Strebe 8 freigegeben ist, so dass die nachrutschenden Streben 8 des Vorrats festgehalten und mit den Magazinen 26 in die Transportstellung angehoben werden. Anschließend werden die Montageeinheiten 2 zu der vorgestimmten x-Position der nächsten Strebe 8 verfahren, und die oben beschriebenen Vorgänge, d. h. Absetzen einer Strebe 8 und Durchbohren der Längsträger 10, wiederholen sich.

Nachdem in "Vorwärtsfahrt" (beispielsweise in Richtung +x) der Montageeinheiten 12 sämtliche Streben 8 an ihren Zielpositionen abgesetzt und entsprechende Montagelöcher durch die Längsträger 10 des Fensterrahmens 6 gebohrt wurden, wird der Abstand zwischen den Trägerelementen 18 für die Montageeinheiten 12 derart verringert und damit die Längsträger 10 des Fensterahmens 6 aufeinander zu bewegt, dass die zuvor vorhandenen Zwischenräume zwischen den Längsträgern 10 und den Streben 8 eliminiert werden, ebenso die Zwischenräume zwischen den auf Gehrung geschnittenen Enden der Längsträger 10 und der endseitigen Querträger 108 (siehe FIG. 2). Die einzelnen Profilelemente 4 des Fensterrahmens liegen nunmehr für die Verschraubung bereit aneinander an. In "Rückwärtsfahrt" (in Richtung -x) der Montageeinheiten 12 erfolgt nun die Verschraubung der Streben 8 mit den Längsträgern 10.

Dazu wird die jeweilige Strebenposition unter Berücksichtigung des seitlichen Versatzes (in x-Richtung) zwischen Bohreinheit 22 und Schraubeinheit 24 von den Montageeinheiten 12 angefahren. Eine Höhenveränderung der Schraubeinheit 24 gegenüber der zuvor beim letzten Bohrvorgang eingestellten Höhe z ist normalerweise nicht nötig. Die Längsträger 10 werden zwischen den Fixierelementen 86 und 88 eingespannt, und die möglicherweise zuvor nicht ganz exakt abgesetzte oder zwischenzeitlich leicht seitlich verrutschte Strebe 8 wird automatisch durch Anheben der Zentrierhilfe 102 zentriert, so dass beim anschließenden Schraubvorgang mit Hilfe der Schraubeinheit 24 die Montageschraube ohne weitere manuelle Justiervorgänge exakt das Bohrloch durch die Längsträger 10 und die Zielposition an der Stirnseite 112 der Strebe 8 trifft. Falls eine Mehrfachverschraubung vorgesehen ist, muss die Höhe z der Schraubeinheit 24 nach der ersten Verschraubung entsprechend verändert und der Schraubvorgang wiederholt werden. Ansonsten bleibt die Höhe konstant. Nach erfolgter Verschraubung werden die Zentrierhilfe 102 abgesenkt und die Fixierelemente 86 und 88 gelöst, und die nächste Strebenposition 8 wird angefahren.

Nachdem auf diese Weise sämtliche Schraubverbindungen hergestellt wurden, fährt die Montageanlage 2 zurück in die Grundstellung, und der fertig montierte Fensterrahmen 6 kann entnommen werden.

Nicht berücksichtigt wurde in der Beschreibung bislang, dass die Profilelemente 4 möglicherweise eine Außenkontur besitzen, die komplexer ist als eine einfache Stab- oder Quaderform. In diesem Fall kann es erforderlich sein, zusätzliche Justierbewegungen durchzuführen, um die Streben 8 an ihren Stirnseiten 112 in die für eine Verschraubung mit den Längsträgern 10 erforderliche Endlage zu bringen. Dazu ist es vorteilhaft, wenn die in den Figuren nicht dargestellte Auflage für die Streben 8 höhenverstellbar ist. Insbesondere in Kombination mit der Verstellbarkeit der Zwischenplatten 48 in y-Richtung können dann auch komplexe Justiervorgänge (Einrasten von Anschlussstücken etc.) verwirklicht werden. Die Auflage kann darüber hinaus auch nach Art eines Förderbandes in x-Richtung verschiebbar sein, um beispielsweise einen fertig montierten Fensterrahmen 6 abzutransportieren.

Schließlich kann die Montageanlage 2 selbstverständlich noch weitere Einheiten oder Aggregate zur Durchführung weiterer Funktionen oder Montageschritte aufweisen oder mit bestehenden Systemen für derartige Zwecke kombiniert werden. Dabei kann es sich insbesondere um Eckenschweißanlagen zur Verschweißung der Längsträger 10 mit den Querträgern 108 an den Ecken 110 des Fensterrahmens 6 handeln. Die Bewegungsabläufe der Einzelanlagen können dabei zweckmäßigerweise in einer Gesamtsteuerung koordiniert werden und teilweise simultan ablaufen, um die Gesamtmontagezeit so kurz wie möglich zu halten.

Es versteht sich, dass einige der oben gemachten Angaben lediglich beispielhafter Natur sind, und dass es möglich ist, diversere konstruktive Elemente der Montageanlage oder der Verfahrensschritte abzuändern. So könnte es etwa vorgesehen sein, anstatt erst sämtliche Bohrungen für alle Streben nacheinander vorzunehmen und anschließend die Verschraubungen durchzuführen, Bohrungen und Schraubvorgänge alternierend (Strebe für Strebe) durchzuführen. Auch ist es nicht unbedingt erforderlich, dass der Bohrer und das Schraubwerkzeug auf gleicher Höhe liegen, oder der Bohrer und das Magazin sich an derselben Längskoordinate befinden, solange ein entsprechender Versatz durch geeignete Steuerungsvorgänge ausgeglichen werden kann. Gegebenenfalls kann in bestimmten Situationen auch auf eine Einspannung des zu montierenden Rahmens mit Hilfe der Fixierelemente verzichtet werden. Ähnliches gilt für die Zentrierung der Streben.

Anstelle kontinuierlicher Einstellmöglichkeiten - etwa für die Breite des Magazins oder die Stellung der beweglichen Einheiten in Längsrichtung, Querrichtung oder Höhe - könnte auch eine Einschränkung auf vordefinierte mechanische Rastpunkte oder ähnliches vorgesehen sein.

Für bestimmte Sonderaufgaben kann es auch vorgesehen sein, die normalerweise bestehende bewegungsmäßige Kopplung der beiden Montageeinheiten aufzuheben, und diese unabhängig voneinander anzusteuern, oder eine der beiden zu deaktivieren, etwa dann, wenn keine Streben abgesetzt werden sollen, sondern nur Bohr- und/oder Schraubvorgänge durchgeführt werden.

### Bezugszeichenliste

- 1: Montageanlage
- 4: Profilelement
- 6: Fensterrahmen
- 8: Strebe
- 10: Längsträger
- 12: Montageeinheit
- 14: Schrittmotor
- 16: Führungsschiene
- 18: Trägerelement
- 20: Strebeneinheit
- 22: Bohreinheit
- 24: Schraubeinheit
- 26: Magazin
- 28: Pneumatikzylinder
- 30: Führungsschiene
- 32: Seitenwand
- 34: Rückwand
- 36: Aufnahme- und Führungsschacht
- 38: Beistellanschlag
- 40: Halteklaue
- 44: Basisplatte
- 46: Führungsschiene
- 48: Zwischenplatte
- 50: Pneumatikzylinder
- 52: Montageplatte
- 54: Seitenwand
- 56: Pneumatikzylinder
- 58: Bohrfutter
- 62: Antriebsmotor
- 64: Welle
- 66: Kopfteil
- 68: Pneumatikzylinder
- 70: Kopfteil
- 72: Schraubwerkzeug
- 74: Schraubklinge
- 80: Pneumatikzylinder
- 82: Anschlussstück
- 84: Mittellinie
- 86: oberes Fixierelement
- 88: unteres Fixierelement
- 90: Hubmechanismus
- 94: Pneumatikzylinder
- 96: Mehrfachanschlag
- 98: Laufrolle
- 100: Laufrolle
- 102: Zentrierhilfe
- 104: Abrutschschräge
- 106: Hubvorrichtung
- 108: Querträger
- 110: Ecke
- 112: Stirnseite

## Patentansprüche

1. Montageanlage (2) für aus Profilelementen (4) zusammengesetzte Fensterahmen (6) oder Türrahmen, wobei die Profilelemente (4) Längsträger (10), Querträger (108) und Streben (8) umfassen, mit zumindest einer an den späteren Verbindungstellen mit den Streben (8) Bohrlöcher in die Längsträger (10) einbringenden Bohreinheit (22),
**gekennzeichnet durch**
• zumindest eine einen Vorrat von Streben (8) aufnehmende und die Streben (8) an ihrer jeweiligen Montageposition zwischen den Längsträgern (10) absetzende Strebeneinheit (20), und
• zumindest eine Montageschrauben **durch** die Bohrlöcher hindurch in die Streben (8) eindrehende und auf diese Weise die Streben (8) mit den Längsträgern (10) fest verbindende Schraubeinheit (24).

2. Montageanlage (2) nach Anspruch 1 mit zwei im Wesentlichen spiegelsymmetrisch aufgebauten und ansteuerseitig im Bewegungsablauf synchronisierten, jeweils eine Strebeneinheit (20), eine Bohreinheit (22) und eine Schraubeinheit (24) aufweisenden Montageeinheiten (12).

3. Montageanlage (2) nach Anspruch 2, deren Montageeinheiten (12) entlang von horizontal ausgerichteten Führungsschienen (16) relativ zu den beiden Längsträgern (10) eines Rahmens in deren Längsrichtung (x) verfahrbar sind.

4. Montageanlage (2) nach Anspruch 3, wobei der Abstand zwischen den Führungsschienen (16) für die beiden Montageeinheiten (12) veränderbar ist.

5. Montageanlage (2) nach einem der Ansprüche 2 bis 4, wobei jede der Strebeneinheiten (20) ein höhenverstellbares Magazin (26) umfasst, und wobei die Streben (8) des Vorrats an ihrem jeweiligen Ende in dem diesem Ende zugeordneten Magazin (26) festgehalten sind.

6. Montageanlage (2) nach Anspruch 5 mit Mitteln zum Absetzen einer Strebe (8) aus dem Vorrat in einer abgesenkten Auswurfstellung der Magazine (26) und mit Mitteln zum Blockieren des Auswurfs in einer angehobenen Transportstellung.

7. Montageanlage (2) nach einem der Ansprüche 2 bis 6, deren Bohreinheit (22) unabhängig von der Längsposition (x) der Montageeinheit (12) in Querrichtung (y) verfahrbar sowie höhenverstellbar (z) ist.

8. Montageanlage (2) nach einem der Ansprüche 2 bis 7, deren Schraubeinheit (24) unabhängig von der Längsposition (x) der Montageeinheit (12) in Querrichtung (y) verfahrbar sowie höhenverstellbar (z) ist.

9. Montageanlage (2) nach den Ansprüchen 7 und 8, deren Bohreinheit (22) und deren Schraubeinheit (24) sich stets auf derselben Höhe (z) befinden.

10. Montageanlage (2) nach den Ansprüchen 7 und 8, deren Bohreinheit (22) und deren Schraubeinheit (24) in Längsrichtung (x) gesehen einen konstanten Versatz zueinander besitzen.

11. Montageanlage (2) nach einem der Ansprüche 2 bis 10 mit an den Montageeinheiten (12) angebrachten Fixierelementen (86, 88) zum vorübergehenden Einspannen der Längsträger (10).

12. Montageanlage (2) nach einem der Ansprüche 1 bis 11, bei der die zur Durchführung der Montageschritte vorgesehenen beweglichen Komponenten pneumatisch und/oder elektromotorisch angetrieben sind, wobei zur Überwachung ihrer Stellung Positionsgeber vorgesehen sind, und wobei eine elektronische Steuerungseinheit die Bewegungsvorgänge automatisch steuert.

13. Verfahren zur Montage eines Fensterrahmens (6) oder Türrahmens unter Verwendung einer Montageanlage (2) nach einem der Ansprüche 1 bis 12, bei dem in einem ersten Durchgang zunächst sämtliche Streben (8) nacheinander an ihrer Montageposition abgelegt werden, wobei jeweils im Wesentlichen zeitgleich mit dem Ablegen der jeweiligen Strebe (8) die zugehörigen Bohrlöcher in die Längsträger (10) eingebracht werden, und wobei in einem anschließenden zweiten Durchgang nacheinander sämtliche Montageschrauben eingedreht und festgezogen werden.

14. Verfahren nach Anspruch 13, bei dem während des ersten Durchgangs Spalte zwischen den Längsträgern (10) und den abgelegten Streben (8) vorhanden sind, und wobei vor dem zweiten Durchgang die Längsträger (10) aufeinander zu geschoben und damit die Spalte geschlossen werden.

15. Verfahren nach Anspruch 13 oder 14, wobei während der Bohrvorgänge und der Schraubvorgänge die Längsträger (10) in unmittelbarer Nähe zur Bohr- oder Schraubstelle durch Fixierelemente (86, 88) eingespannt werden, welche zum Verschieben der Montageeinheiten (12) in Längsrichtung (x) gelöst werden.

## Claims

1. Assembly system (2) for window frames (6) or door frames composed of profiled elements (4), the profiled elements (4) comprising longitudinal members (10), cross members (108) and struts (8), having at least one drilling unit (22) which makes holes in the longitudinal members (10) at the subsequent points of connection to the struts (8),
**characterised by**
• at least one strut unit (20) which receives a supply of struts (8) and deposits the struts (8) at the respective assembly positions thereof between the longitudinal members (10), and
• at least one screw unit (24) which screws assembly screws into the struts (8) through the holes and thereby rigidly connects the struts (8) to the longitudinal members (10).

2. Assembly system (2) according to claim 1, comprising two assembly units (12) which are constructed in a substantially mirror-symmetric manner, are synchronised on the control side during the movement sequence, and each comprise a strut unit (20), a drilling unit (22) and a screw unit (24).

3. Assembly system (2) according to claim 2, the assembly units (12) of which can be displaced in the longitudinal direction (x) thereof relative to the two longitudinal members (10) of a frame along horizontally oriented guide rails (16).

4. Assembly system (2) according to claim 3, wherein the distance between the guide rails (16) can be modified for the two assembly units (12).

5. Assembly system (2) according to any of claims 2 to 4, wherein each of the strut units (20) comprises a vertically adjustable magazine (26), and the struts (8) of the supply are held at the respective ends thereof in the magazine (26) assigned to said ends.

6. Assembly system (2) according to claim 5, comprising means for depositing a strut (8) from the supply when the magazines (26) are in a lowered ejection position, and comprising means for blocking the ejection in a raised transport position.

7. Assembly system (2) according to any of claims 2 to 6, the drilling unit (22) of which can be displaced in the transverse direction (y) and vertically adjusted (z) regardless of the longitudinal position (x) of the assembly unit (12).

8. Assembly system (2) according to any of claims 2 to 7, the screw unit (24) of which can be displaced in the transverse direction (y) and vertically adjusted (z) regardless of the longitudinal position (x) of the assembly unit (12).

9. Assembly system (2) according to claims 7 and 8, the drilling unit (22) and the screw unit (24) of which are always at the same height (z).

10. Assembly system (2) according to claims 7 and 8, the drilling unit (22) and the screw unit (24) of which have a constant offset relative to one another when viewed in the longitudinal direction (x).

11. Assembly system (2) according to any of claims 2 to 10, comprising fixing elements (86, 88) which are mounted on the assembly units (12) for temporarily clamping the longitudinal members (10).

12. Assembly system (2) according to any of claims 1 to 11, in which the movable components provided for carrying out the assembly steps are driven pneumatically or by an electric motor, position transmitters being provided for monitoring the position of said components, and an electronic control unit automatically controlling the movement processes.

13. Method for assembling a window frame (6) or door frame using an assembly system (2) according to any of claims 1 to 12, in which in a first pass, all the struts (8) are initially deposited in succession in the assembly position thereof, the assigned holes being made in the longitudinal members (10) at basically the same time as the respective struts (8) are deposited, and in a subsequent second pass, all the assembly screws are screwed in and secured in succession.

14. Method according to claim 13, in which there are gaps between the longitudinal members (10) and the deposited struts (8) during the first pass, and the longitudinal members (10) being pushed together before the second pass such that the gaps are closed.

15. Method according to either claim 13 or claim 14, wherein during the drilling processes and the screwing processes, the longitudinal members (10) are clamped in close proximity to the drilling or screwing point by means of fixing elements (86, 88), which are detached for displacing the assembly units (12) in the longitudinal direction (x).

## Revendications

1. Installation de montage (2) pour des encadrements de fenêtres (6) ou encadrements de portes composés d'éléments profilés (4), les éléments profilés (4) comprenant des longerons (10), des traverses (108) et des contrefiches (8), avec au moins une unité de perçage (22) réalisant des trous de perçage dans les longerons (10) au niveau des emplacements de raccordement ultérieurs avec les contrefiches (8),
**caractérisée par**
• au moins une unité de contrefiches (20) logeant une réserve de contrefiches (8) et déposant les contrefiches (8) au niveau de leur position de montage respective entre les longerons (10), et
• au moins une unité de vissage (24) vissant des vis de montage dans les contrefiches (8) à travers les trous de perçage et raccordant ainsi fermement les contrefiches (8) aux longerons (10).

2. Installation de montage (2) selon la revendication 1, avec deux unités de montage (12) installées essentiellement en symétrie spéculaire et synchronisées côté pilotage lors de leur mouvement, et présentant respectivement une unité de contrefiches (20), une unité de perçage (22) et une unité de vissage (24).

3. Installation de montage (2) selon la revendication 2, dont les unités de montage (12) sont déplaçables dans leur direction longitudinale (X) par rapport aux deux longerons (10) d'un cadre le long de rails de guidage (16) orientés horizontalement.

4. Installation de montage (2) selon la revendication 3, dans laquelle l'intervalle entre les rails de guidage (16) pour les deux unités de montage (12) est modifiable.

5. Installation de montage (2) selon une des revendications 2 à 4, dans laquelle chacune des unités de contrefiches (20) comprend un magasin (26) réglable en hauteur, et les contrefiches (8) de la réserve étant retenues au niveau de leur extrémité respective dans le magasin (26) affecté à cette extrémité.

6. Installation de montage (2) selon la revendication 5, avec des moyens pour déposer, à partir de la réserve, une contrefiche (8) dans une position d'éjection abaissée des magasins (26), et avec des moyens pour bloquer l'éjection dans une position de transport relevée.

7. Installation de montage (2) selon une des revendications 2 à 6, dont l'unité de perçage (22) est déplaçable dans la direction transversale (y) indépendamment de la position longitudinale (x) de l'unité de montage (12) tout en étant réglable en hauteur (z).

8. Installation de montage (2) selon une des revendications 2 à 7, dont l'unité de vissage (24) est déplaçable dans la direction transversale (y) indépendamment de la position longitudinale (x) de l'unité de montage (12) tout en étant réglable en hauteur (z).

9. Installation de montage (2) selon les revendications 7 et 8, dont l'unité de perçage (22) et l'unité de vissage (24) se trouvent constamment à la même hauteur (z).

10. Installation de montage (2) selon les revendications 7 et 8, dont l'unité de perçage (22) et l'unité de vissage (24) possèdent, vu dans la direction longitudinale (x), un décalage constant entre elles.

11. Installation de montage (2) selon une des revendications 2 à 10, avec des éléments de fixation (86, 88) placés sur les unités de montage (12) pour le serrage temporaire des longerons (10).

12. Installation de montage (2) selon une des revendications 1 à 11, dans laquelle les composants mobiles prévus pour la réalisation des étapes de montage sont entraînés de façon pneumatique et/ou par moteur électrique, des transmetteurs de position étant prévus pour la surveillance de leur emplacement, et une unité de commande électronique commandant automatiquement les processus de déplacement.

13. Procédé de montage d'un encadrement de fenêtre (6) ou encadrement de porte avec utilisation d'une installation de montage (2) selon une des revendications 1 à 12, dans lequel, dans un premier passage, toutes les contrefiches (8) sont d'abord déposées l'une après l'autre sur leur position de montage, les trous de perçage correspondants étant réalisés dans les longerons (10) respectivement essentiellement en même temps que la dépose de la contrefiche (8) respective, et toutes les vis de montage étant vissées et serrées à fond les unes après les autres dans un deuxième passage suivant.

14. Procédé selon la revendication 13, dans lequel, pendant le premier passage, il existe des fentes entre les longerons (10) et les contrefiches (8) déposées, et les longerons (10) étant poussés les uns contre les autres avant le deuxième passage, et les fentes étant ainsi fermées.

15. Procédé selon la revendication 13 ou 14, dans lequel les longerons (10) sont, pendant les processus de perçage et les processus de vissage, à proximité immédiate de l'emplacement de perçage ou de vissage, serrés par des éléments de fixation (86, 88) qui sont desserrés pour le déplacement des unités de montage (12) dans la direction longitudinale (x).
